Europäisches Patentamt

European Patent Office

Office européen des brevets

(19)

(11) Numéro de publication : **0 290 297 B1**

(12)

# FASCICULE DE BREVET EUROPEEN

(45) Date de publication du fascicule du brevet :
24.04.91 Bulletin 91/17

(51) Int. Cl.⁵ : **G01C 19/64**

(21) Numéro de dépôt : 88400538.0

(22) Date de dépôt : 08.03.88

(54) **Filtre de réjection de signaux optiques et applications aux interféromètres en anneaux.**

(30) Priorité : 13.03.87 FR 8703460

(43) Date de publication de la demande :
09.11.88 Bulletin 88/45

(45) Mention de la délivrance du brevet :
24.04.91 Bulletin 91/17

(84) Etats contractants désignés :
DE GB

(56) Documents cités :
EP-A- 0 030 891

(73) Titulaire : THOMSON-CSF
51, Esplanade du Général de Gaulle
F-92800 Puteaux (FR)

(72) Inventeur : Lefèvre, Hervé
THOMSON-CSF SCPI 19, avenue de Messine
F-75008 Paris (FR)

(74) Mandataire : Grynwald, Albert et al
THOMSON-CSF SCPI
F-92045 PARIS LA DEFENSE CEDEX 67 (FR)

## Description

L'invention concerne un filtre de réjection de signaux optiques permettant notamment de rejeter les fréquences paires et de conserver les fréquences impaires d'un signal optique composé des différentes harmoniques d'une fréquence fondamentale. L'invention concerne également une application d'un tel filtre aux interféromètres en anneaux.

Le filtrage en fréquences de signaux optiques pose des problèmes et n'est résolu selon les techniques concernées que par des méthodes classiques d'électronique.

L'invention propose un filtre qui permette d'éliminer de façon sûre les fréquences paires en associant une combinaison de dispositifs optiques à un circuit amplificateur électronique.

Ce filtre est plus particulièrement applicable aux interféromètres en anneaux et plus particulièrement aux interféromètres prévoyant, dans une branche du guide d'onde en anneau de l'interféromètre, un dispositif de modulation de phase permettant de détecter avec une sensibilité accrue un déphasage des deux ondes contrarotatives parcourant l'anneau de l'interféromètre.

Un interféromètre de type connu comporte principalement une source d'énergie lumineuse généralement constituée par un laser ; un dispositif optique constitué soit d'un certain nombre de miroirs, soit d'une fibre optique enroulée sur elle-même, ce dispositif formant guide d'onde ; un dispositif de séparation et de mélange de la lumière et un dispositif de détection et de traitement du signal détecté.

On trouvera des exemples de descriptions de tels interféromètres dans les demandes de brevets français :

n° 2 471 583 déposée le 14 décembre 1979
n° 2 566 133 déposée le 14 juin 1984

Il est connu que dans ces interféromètres, il existe deux ondes issues du dispositif séparateur et parcourant en sens opposés un même trajet optique.

Des perturbations ou des grandeurs à mesurer se traduisent sur les ondes par des déphasages et on sait mesurer une différence de phase existant entre deux ondes.

Pour la mesure de perturbations de faible amplitude donnant lieu à une faible différence de phase, il a été proposé dans le brevet français n° 2.471.583, une modulation de phase des ondes qui se propagent dans l'anneau, alternativement de $+\pi/2$ et $-\pi/2$ radian.

Une modulation de phase étant produite à une extrémité de la boucle de fibre, l'une des ondes subit la modulation au moment où celle-ci est produite, alors que l'autre onde l'a subie avec un retard égal au temps de propagation dans la fibre. Ce temps de propagation satisfait la relation :

$t_o = \dfrac{nl}{c}$, dans laquelle n est l'indice équivalent de réfraction de la fibre, 1 la longueur de la fibre et c la vitesse de la lumière dans le vide. La "fréquence propre" de l'interféromètre est $(1/2\, t_o)$, et représente la fréquence de modulation à laquelle les deux ondes subissent leurs déphasages respectifs en opposition de phase. Le déphasage entre les deux ondes optiques est donc égal à la différence $S(t) - S(t-t_o)$, où $S(t)$ est le signal appliqué au modulateur de phase. On voit donc que, si la demi-période du signal de modulation est $t_o$, le déphasage en sortie de l'interféromètre est égal au double du déphasage appliqué. C'est cette méthode qui est utilisée pour créer le biais donnant le point de fonctionnement de l'interféromètre.

A ce déphasage s'ajoute un déphasage $\Delta\emptyset_o$ dû à un effet à mesurer. Il est possible d'exploiter les signaux directement et de mesurer la composante en Sin $\Delta\emptyset_o$ portée par les harmoniques impaires. Cependant il existe des harmoniques paires qu'il est difficile d'éliminer.

Le filtre de l'invention appliqué à un interféromètre en anneau permet de les éliminer de façon sûre.

L'invention concerne un filtre de réjection de signaux optiques comprenant une voie de transmission d'un signal optique modulé en puissance caractérisé en ce qu'il comporte également :

– un séparateur de faisceau recevant ledit signal optique modulé et fournissant, sur une première et une deuxième sorties, une première et une deuxième parties de ce signal optique modulé ;

– un premier moyen de transmission optique présentant un premier temps de propagation connecté par une première extrémité à la première sortie du séparateur de faisceau et conduisant la première partie de signal optique ;

– un deuxième moyen de transmission optique présentant un deuxième temps de propagation, connecté par une première extrémité à la deuxième sortie du séparateur de faisceau et conduisant la deuxième partie de signal optique;

– un premier détecteur optoélectronique connecté à une deuxième extrémité du premier moyen de transmission optique, détectant l'intensité de la première partie du signal optique transmise par cette extrémité et fournissant en échange sur une sortie un premier signal électrique ;

– un deuxième détecteur optoélectronique connecté à une deuxième extrémité du deuxième moyen de transmission optique détectant l'intensité de la deuxième partie du signal optique transmise par cette extrémité et fournissant en échange sur une sortie un deuxième signal électrique ;

– un amplificateur différentiel possédant une première entrée recevant le premier signal électrique, une deuxième entrée recevant le deuxième signal électrique, une sortie fournissant un signal représentant la différence entre les deux signaux électriques reçues.

L'invention concerne également un interféromètre en anneau comportant :

– une source lumineuse ;

– un guide d'onde interféromètrique possédant deux extrémités ;

– des moyens photodétecteurs d'interférences de deux ondes lumineuses ;

– des moyens optiques séparateurs et mélangeurs couplant optiquement les extrémités du guide d'onde à la source lumineuse et aux moyens photodétecteurs ;

– des moyens de déphasage optique à commande électrique associés au guide d'onde agissant sur les ondes lumineuses circulant dans le guide d'onde ;

– un oscillateur de commande des moyens de déphasage optique délivrant des signaux électriques de période égale au temps mis par une onde optique délivrée par la source pour parcourir le guide d'onde interféromètrique ;

caractérisé en ce que les moyens photodétecteurs d'interférences comporte un filtre, selon l'une quelconque des revendications précédentes, dont la différence des temps de propagation des deux moyens de transmission est égal au temps mis par une onde optique issue de la source pour parcourir le guide d'onde interférométrique.

Les différents objets et caractéristiques de l'invention apparaîtront plus clairement dans la description qui va suivre faite en se reportant aux figures annexées qui représentent :

– la figure 1, un exemple de réalisation d'un filtre selon l'invention ;

– la figure 2, un exemple de diagramme de fonctionnement du filtre de la figure 1 ;

– la figure 3, un exemple de réalisation d'un interféromètre en anneau mettant en oeuvre ; le filtre selon l'invention ;

– la figure 4, une courbe illustrant le fonctionnement de l'interféromètre de la figure 3.

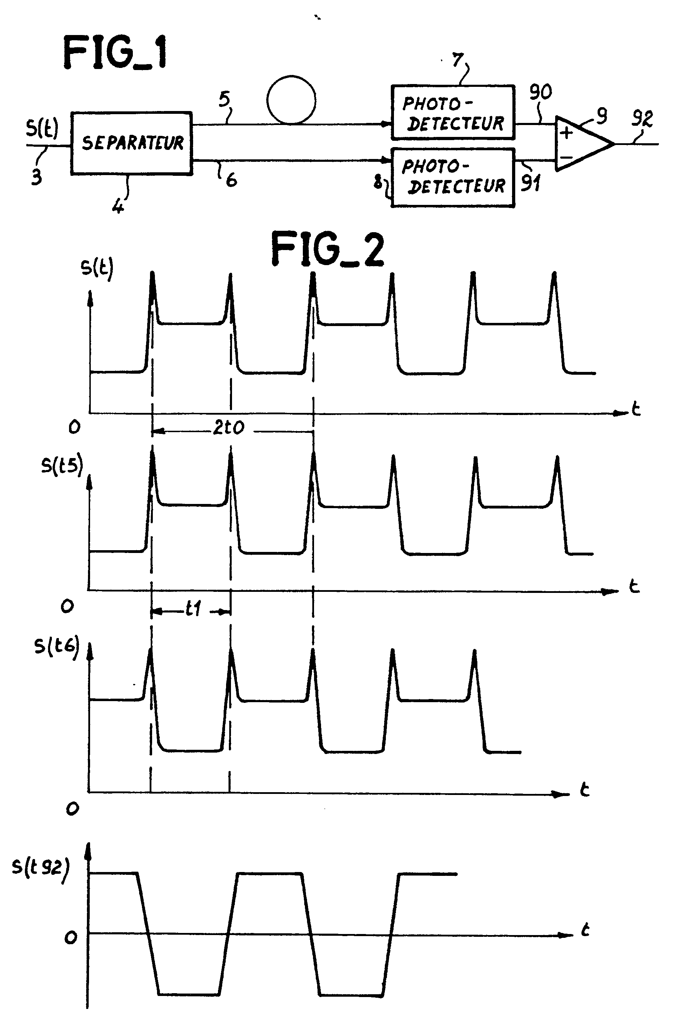

En se reportant à la figure 1, on va tout d'abord décrire un exemple de réalisation d'un filtre selon l'invention.

Ce filtre comporte un guide optique 3 transmettant un signal lumineux s(t). Un séparateur de faisceau 4 reçoit se signal lumineux et le divise en deux parties. Il possède deux sortie auxquelles sont connectés deux guides 5 et 6. Il transmet sur chaque guide optique une onde lumineuse correspondant à une partie du signal lumineux S(t). Le guide optique (5) transmet alors une onde S(t5) et le guide optique une onde S(t6). L'un des guides optiques 5 ou 6 possède des moyens permettant d'affecter d'un retard t1 l'onde lumineuse qu'il transmet. Par exemple, selon l'exemple de réalisation de la figure 1, les guides optique 5 et 6 sont réalisés à l'aide de fibres optiques. Pour induire ce retard t1, la fibre optique 5 est plus longue que là fibre 6. La longueur supplémentaire de la fibre 5 constitue une ligne à retard dont le temps de retard t1 est fonction de la différence de longueur entre les fibres.

A titre d'exemple, si le signal S(t) est de la forme représentée par la courbe S(t) de la figure 2 avec une période de valeur 2t0, le retard t1 doit être tel que les deux ondes lumineuses après transmission par les guides optiques 5 et 6 soient décalées d'une demi-période. Le retard t1 apporté par le guide 5 doit être égal à t0.

A chaque guide optique 5 et 6 sont connectés des photodétecteurs 7 et 8 détectant l'intensité des ondes lumineuses S(t5) et S(t6) transmises par les guides 5 et 6. Chaque photodétecteur fournit en échange un signal électrique de même forme que l'onde lumineuse qu'il reçoit. Ces signaux électriques sont appliqués aux entrées 90 et 91 d'un amplificateur différentiel 9. L'amplificateur différentiel 9 reçoit donc deux signaux électriques de la forme représentée par les courbes S(t5) et S(t6) de la figure 2.

L'amplificateur 9 effectue la différence des deux signaux reçus sur ces deux entrées 90 et 91. Il fournit sur sa sortie 92 un signal S(t92) et élimine ainsi les pics de puissance affectant de la même façon les signaux d'entrée.

On voit donc qu'un signal lumineux d'entrée S(t), après avoir été séparé en deux ondes lumineuses, est transmis à des photodétecteurs avec une onde décalée d'une demi-période en opposition de phase par rapport à l'autre. Un amplificateur différentiel effectue une différence des signaux détectés. Cette soustraction permet de supprimer les pics ce qui est intéressant car on sait que de tels pics ont l'inconvénient de saturer les préampliplificateurs.

Un tel filtre rejète les fréquence paires du type

$$\frac{2n}{2 \cdot t1},$$

pour n entier et supérieur ou égal à 0, et laisse passer les fréquences impaires du type

$$\frac{2n + 1}{2 \cdot t1}$$

Les deux photodétecteurs peuvent être fabriqués sur le même substrat. Ce substrat peut être par exemple en silicium pour des longueurs d'ondes lumineuses de l'ordre de 0,8 à 0,85 micromètres. La fabrication des deux photodétecteurs sur un même substrat en mode de réjection commun facilite l'élimination des parasites électriques.

Sur la figure 2, on a illustré un fonctionnement à l'aide d'un signal S(t) d'allure sensiblement rectangulaire parce qu'un tel fonctionnement est plus facile à comprendre et à mettre en évidence, mais le même filtre fonctionnent en régime sinusoïdale et permet d'éliminer les harmoniques paires.

Un grand avantage d'un tel filtre est de ne pas introduire de déphasage contrairement aux filtres passe-bande électriques classiques.

Ce filtre est parfaitement adapté au cas d'un interféromètre en anneau à fibre utilisant la méthode classique de modulation de phase pour obtenir un signal sensible autour de zéro. En effet, une modulation de phase de fréquence f est appliquée à une extrémité de la bobine et on cherche à détecter les fréquences impaires $(2n + 1)f$.

Ce filtrage éliminant les fréquences paires est donc extrêmement utile pour limiter la dynamique du signal qui va attaquer le préamplificateur d'entrée de l'étage de démodulation à la fréquence f.

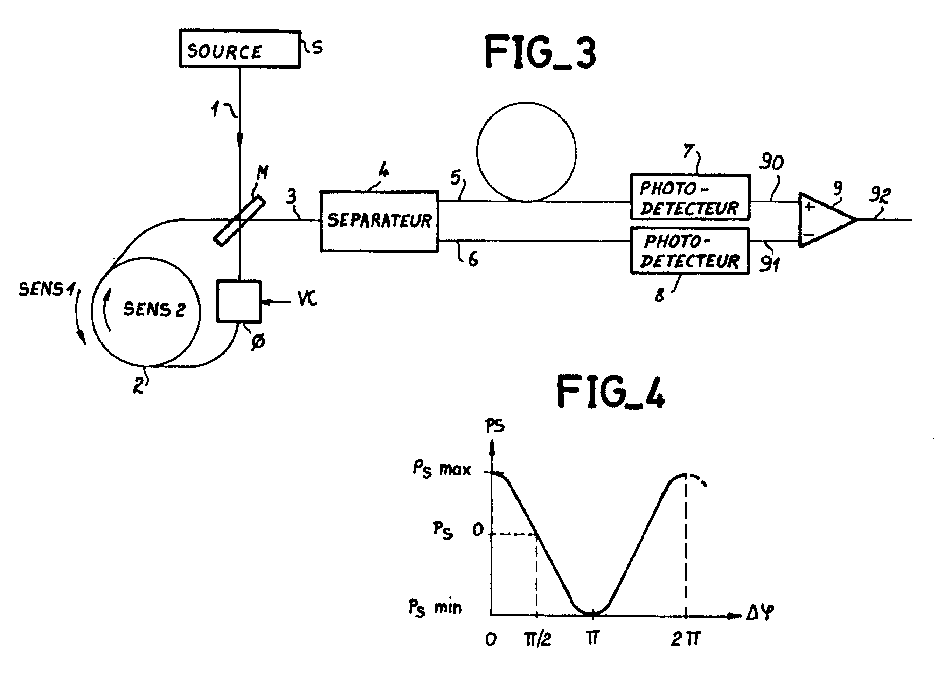

En se reportant à la figure 3, on va maintenant décrire un exemple d'application du filtre de l'invention à un interféromètre en anneau.

Une source laser S produit un faisceau de rayons parallèles 1, vers un dispositif séparateur constitué, par exemple, par une lame ou un miroir semi-transparent M couplé optiquement à l'anneau 2 de l'interféromètre. Cet anneau 2 peut être réalisé par exemple à l'aide d'une fibre optique monomode enroulée sur elle-même. En effet, la sensibilité de la mesure est accrue grâce à l'utilisation d'un parcours optique long proportionnel au nombre de tours. Cet anneau 2 est rebouclé sur le dispositif séparateur M qui joue également le rôle d'un dispositif mélangeur et définit ainsi une branche de sortie 3. L'anneau est donc parcouru par deux ondes se propageant en sens inverses : l'une dans le sens horaire ("sens 2"), l'autre dans le sens anti-horaire ("sens 1"). Ces deux ondes se recombinent sur la lame séparatrice M. Le résultat de cette recombinaison peut être observé dans la branche de sortie 3. Cette branche 3 est connectée à un filtre tel que décrit en relation avec la figure 1. On retrouve donc sur la figure 3, connectés à la branche 3, le séparateur de faisceau 4, les guides d'ondes 5 et 6, les photodétecteurs 7 et 8 et l'amplificateur différentiel 9.

Soit $\Delta\varnothing_o$ la différence de phase entre les deux ondes qui se propagent en sens inverse dans l'anneau et $P_S$ la puissance optique de sortie que l'on peut mesurer dans la branche de sortie 3. En l'absence de perturbation "non réciproque" $\Delta\varnothing_o$ est nul.

Si à titre d'exemple non limitatif, on considère un gyromètre mettant en oeuvre un interféromètre en anneau, une perturbation "non réciproque" va être créée par la mise en rotation du gyromètre. La différence de phase n'est plus nulle et l'on a $\Delta\varnothing_o = \alpha\Omega$ où

$\Omega$ est la vitesse de rotation et $\alpha = k \dfrac{L}{\lambda C}$ où k est une constante dépendant de la géométrie du gyromètre, L la longueur du parcours optique, $\lambda$ la longueur d'onde de la lumière émise par la source laser S, et C la vitesse de la lumière dans le vide. Lorsque la vitesse de rotation $\Omega$ augmente, la différence de phase $\Delta\varnothing_o$ augmente dans les mêmes proportions car le coefficient $\alpha$ reste constant. La puissance optique $P_S$ évolue selon une loi cosinuoïdale. En effet :

$$P_S = P_{1S} + P_{2S} + 2\, P_{1S}\, P_{2S}\, \text{Cos}\, (\Delta\varnothing_o)\, ;$$

relation dans laquelle la composante $P_{1S}$ correspond au "sens 1" et la composante $P_{2S}$ au "sens 2". Cette dépendance en cos $\Delta\Phi_o$ conduit à une sensibilité nulle au repos (sans rotation). Il faut placer le système "au biais" pour obtenir une dépendance en sin $\Delta\Phi_o$.

Pour cela, selon l'enseignement du brevet français n° 2.471.583, on introduit sur le parcours des ondes dans l'anneau 2, un modulateur de phase mettant en jeu un effet réciproque. Ce modulateur $\varnothing$ (figure 3) est excité de façon à créer une variation de phase $\varnothing$ (t) de l'onde qui le traverse. Cette variation est périodique, sa période étant égale à 2 $t_o$, $t_o$ étant le temps de parcours d'une onde dans l'anneau.

La différence de phase devient alors

$$\Delta \varnothing' = \Delta \varnothing_o + \varnothing\, (t) - \varnothing(t\text{-}t_o)$$

où chacune des ondes circulant en sens inverses subit ce déphasage lorsqu'elle traverse le modulateur avec

$$\varnothing\, (t) = \varnothing\, (t + 2t_o)$$

Le signal de déphasage appliqué peut être avantageusement un signal de déphasage réciproque de forme rectangulaire.

On obtiendra alors dans la branche 3 un signal d'interférence S(t) de la forme représentée sur la figure 2.

En l'absence de perturbation les deux ondes circulant selon le "sens 1" et selon le "sens 2" ne subissent aucun déphasage autre que celui imposé par le circuit $\varnothing$ et le signal S(t) a ses niveaux égaux dans chaque demi-période $t_o$. Par contre en présence d'un déphasage $\Delta\varnothing$ les niveaux sont différents dans chaque demi-période du signal S(t) comme cela est représenté en figure 2.

Selon l'invention le retard apporté par le guide d'onde 5 par rapport au guide d'onde 6 est tel que les deux ondes S(t5) et S(t6) sont mises en opposition de phase. Le retard t1 est donc égal à la demi-période $t_o$. Cette demi-période $t_o$ étant, comme cela a déjà été précisé précédemment, égal au temps de parcours d'une onde dans l'anneau 2, le retard t1 doit aussi être égal à ce temps de parcours.

Dans le cadre d'une réalisation des guides d'ondes 5 et 6 à l'aide de fibres optiques, la fibre optique 5 comporte selon l'invention un anneau (ou bobine de fibre optique) de longueur égale à celle de la fibre constituant l'anneau interférométrique 2. Ainsi, si la fibre 5 est d'un même matériau que celle de l'anneau interférométrique, le retard t1 apporté par la fibre 5 est bien égal au temps de parcours d'une onde dans l'anneau interférométrique et de ce fait à la demi-période $t_o$.

A titre d'exemple pour un anneau interférométrique de 200 mètres (et donc de longueur de fibre 5 de 200 mètres) on aura un retard de 1 μs et la fréquence de modulation sera de 500 kHz.

Dans le cadre d'un tel type d'application, si il convient pour la fibre 2 de l'anneau interférométrique d'avoir une fibre monomode à conservation de polarisation, il n'est pas obligatoire, par contre, qu'il en soit de même pour la fibre 5. En effet, celle-ci peut être une fibre multimode puisque la bande passante est largement suffisante à ces fréquences d'utilisation.

De plus, la qualité de réjection des harmoniques paires est égale à l'équilibrage des deux voies optiques (5 et 6) du filtre et un rapport de $10^{-2}$ à $10^{-3}$ est parfaitement envisageable.

Enfin l'utilisation de 2 détecteurs $D_1$ et $D_2$ montés sur le même substrat et connectés en mode de réjection commun aide aussi à éliminer les parasites électriques dûs à des champs électriques extérieurs notamment le champs de modulation. Rappelons que le produit fréquence fondamentale transmise f par la longueur de la ligne à retard L est de l'ordre de 100 MHz.m. Ce filtre permet de plus de conserver le fonctionnement en rampe de phase et l'asservissement de la retombée à 2π décrit dans le brevet français n° 2.566.133.

Il est bien évident que la description qui précède n'a été fourni qu'à titre d'exemple et que d'autres variantes peuvent envisagées sans sortir du cadre de l'invention. Les valeurs numériques et les formes des signaux notamment n'ont été fournies que pour illustrer la description.


**Revendications**

1. Filtre de réjection de signaux optiques comprenant une voie de transmission (3) d'un signal optique modulé (St) caractérisé en ce qu'il comporte également :
   - un séparateur de faisceau (4) recevant ledit signal optique modulé (St) et fournissant, sur une première et une deuxième sorties, une première et une deuxième parties de ce signal optique modulé ;
   - un premier moyen de transmission optique (5) présentant un premier temps de propagation connecté par une première extrémité à la première sortie du séparateur de faisceau (4) et conduisant la première partie de signal optique ;
   - un deuxième moyen de transmission optique (6), présentant un deuxième temps de propagation, connecté par une première extrémité à la deuxième sortie du séparateur de faisceau et conduisant la deuxième partie de signal optique ;
   - un premier détecteur optoélectronique (7) connecté à une deuxième extrémité du premier moyen de transmission optique (5), détectant l'intensité de la première partie du signal optique transmise par cette extrémité et fournissant en échange sur une sortie un premier signal électrique ;
   - un deuxième détecteur optoélectronique (8) connecté à une deuxième extrémité du deuxième moyen de transmission optique détectant l'intensité de la deuxième partie du signal optique transmise par cette extrémité et fournissant en échange sur une sortie un deuxième signal électrique ;
   - un amplificateur différentiel (9) possédant une première entrée (90) recevant le premier signal électrique, une deuxième entrée (91) recevant le deuxième signal électrique, une sortie (92) fournissant un signal (st) représentant la différence entre les deux signaux électriques reçues.

2. Filtre de réjection selon la revendication 1, caractérisé en ce que le premier moyen de transmission optique comporte une première fibre optique (5) et que le deuxième moyen de transmission optique comporte une deuxième fibre optique (6).

3. Filtre de réjection selon la revendication 2, caractérisé en ce que la première fibre optique (5) a une longueur différente de celle de la deuxième fibre optique (6).

4. Filtre de réjection selon la revendication 1, caractérisé en ce que le premier et le deuxième détecteurs sont intégrés sur le même substrat.

5. Interféromètre en anneau comportant :
   - une source lumineuse (5) ;
   - un guide d'onde interférométrique (2) possédant deux extrémités ;
   - des moyens photodétecteurs d'interférences de deux ondes lumineuses (7, 8) ;
   - des moyens optiques séparateurs et mélangeurs (M) couplant optiquement les extrémités du guide d'onde à la source lumineuse et aux moyens photodétecteurs ;
   - des moyens de déphasage optique (φ) à commande électrique associés au guide d'onde agissant sur les ondes lumineuses circulant dans le guide d'onde ;
   - un oscillateur de commande des moyens de déphasage optique délivrant des signaux électriques (VC) de période égale au temps mis par une onde optique délivrée par la source pour parcourir le guide d'onde ;
   caractérisé en ce que les moyens photodétecteurs d'interférences comporte un filtre, selon l'une quelconque des revendications précédentes, dont la différence des temps de propagation des deux moyens de transmission (5 et 6) est égal au temps mis par une onde optique issue de la source pour parcourir le guide d'onde interférométrique.

6. Interféromètre en anneau selon la revendication 5, caractérisé en ce que les deux moyens de transmissions (5 et 6) ainsi que le guide d'onde de l'interféromètre étant des fibres optiques, de même nature, la différence de longueur entre ces fibres est égale à la longueur du guide d'onde de l'interféromètre.

## Ansprüche

1. Filter zur Unterdrückung von optischen Signalen, mit einem Übertragungsweg (3) für ein moduliertes, optisches Signal (St), dadurch gekennzeichnet, daß es ferner umfaßt :
   – einen Strahlteiler (4), der das genannte modulierte, optische Signal (St) empfängt und auf einem ersten Ausgang bzw. auf einem zweiten Ausgang einen ersten bzw. einen zweiten Teil dieses modulierten, optischen Signals abgibt ;
   – ein erstes Mittel zur optischen Übertragung (5), das eine erste Ausbreitungszeit aufweist und durch ein erstes Ende an den ersten Ausgang des Strahlteilers (4) angeschlossen ist und den ersten Teil des optischen Signals führt ;
   – ein zweites Mittel zur optischen Übertragung (6), das eine zweite Ausbreitungszeit aufweist und mit einem ersten Ende an den zweiten Ausgang des Bündelseparators angeschlossen ist und den zweiten Teil des optischen Signals führt;
   – einen ersten optoelektronischen Detektor (7), der an ein zweites Ende des ersten Mittels zur optischen Übertragung (5) angeschlossen ist und die Intensität des ersten Teils des optischen Signals, der durch dieses Ende übertragen wird, erfaßt und dafür ein erstes elektrisches Signal an einem Ausgang abgibt ;
   – einen zweiten optoelektronischen Detektor (8), der an ein zweites Ende des zweiten Mittels zur optischen Übertragung angeschlossen ist und die Intensität des zweiten Teils des optischen Signals, der durch dieses Ende übertragen wird, erfaßt und dafür ein zweites elektrisches Signal an einem Ausgang abgibt ;
   – einen Differentialverstärker (9), der einen ersten Eingang (90), der das erste elektrische Signal empfängt, sowie einen zweiten Eingang (91), der das zweite elektrische Signal empfängt und einen Ausgang (92) aufweist, der ein Signal (st) abgibt, das die Differenz zwischen den beiden empfangenen elektrischen Signalen darstellt.

2. Unterdrückungsfilter nach Anspruch 1, dadurch gekennzeichnet, daß das erste Mittel zur optischen Übertragung eine erste optische Faser (5) und daß das zweite Mittel zur optischen Übertragung eine zweite optische Faser (6) umfaßt.

3. Unterdrückungsfilter nach Anspruch 2, dadurch gekennzeichnet, daß die erste optische Faser (5) eine Länge aufweist, die von der Länge der zweiten optischen Faser (6) verschieden ist.

4. Unterdrückungsfilter nach Anspruch 1, dadurch gekennzeichnet, daß der erste sowie der zweite Detektor auf demselben Substrat integriert sind.

5. Ring-Interferometer mit :
   – einer Lichtquelle (S) ;
   – einem Interferometer-Wellenleiter (2), der zwei Enden aufweist ;
   – Mitteln, die eine Photodetektion der Interferenzen zweier Lichtwellen (7, 8) ausführen ;
   – optischen Mitteln (M) zum Trennen und zum Mischen, welche die Enden des Wellenleiters mit der Lichtquelle sowie mit den Photodetektormitteln optisch koppeln ;
   – elektrisch gesteuerten Mitteln zur optischen Phasenverschiebung ($\phi$), die dem Wellenleiter zugeordnet sind und auf die in dem Wellenleiter zirkulierenden Lichtwellen einwirken ;
   – einem Oszillator zur Steuerung der Mittel zur optischen Phasenverschiebung, der elektrische Signale (VC) einer Periode abgibt, die der Dauer entspricht, welche eine durch die Quelle abgegebene optische Welle benötigt, um den Wellenleiter zu durchlaufen ;
   dadurch gekennzeichnet, daß die Interferenz-Photodetektormittel ein Filter nach einem der vorstehenden Ansprüche umfassen, dessen Differenz zwischen den Ausbreitungszeiten der beiden Übertragungsmittel (5 und 6) der Dauer entspricht, die eine aus der Quelle stammende optische Welle benötigt, um den Interferometer-Wellenleiter zu durchlaufen ;

6. Ring-Interferometer nach Anspruch 5, dadurch gekennzeichnet, daß die beiden Übertragungsmittel (5 und 6) und der Wellenleiter des Interferometers optische Faser desselben Typs sind und daß die Längendifferenz zwischen diesen Fasern der Länge des Wellenleiters des Interferometers entspricht.

## Claims

1. A filter for the rejection of optical signals comprising a transmission path (3) for a modulated optical signal (St), characterized in that it furthermore comprises :
   – a beam separator (4) receiving the said optical modulated signal (St) and supplying, at a first and at a second output, first and second parts of this optical modulated signal ;

– a first optical transmission means (5) having a first propagation time and connected at a first end with the first output of the beam separator (4) and conducting the first part of the optical signal ;

– a second optical transmission means (6) having a second propagation time and connected at a first end with the second output of the beam separator and conducting the second par of the optical signal ;

– a first optoelectronic detector (7) connected at a second end of the first optical transmission means (5), and detecting the intensity of the first part of the optical signal transmitted through this end and supplying, by way of exchange at an output, a first electrical signal ;

– a second optoelectronic detector (8) connected at a second end of the second optical transmission means detecting the intensity of the second part of the optical signal transmitted through this end and supplying, by way of exchange at an output, a second electrical signal ;

– and a differential amplifier (9) possessing a first input (90) receiving the first electrical signal, a second input (91) receiving the second electrical signal, an output (92) supplying a signal (st) representative of the difference between the two electrical signals received.

2. The rejection filter as claimed in claim 1, characterized in that the first optical transmission means comprises a first optical fiber (5) and in that the second optical transmission means comprises a second optical fiber (6).

3. The rejection filter as claimed in claim 2, characterized in that the first optical fiber (5) has a length different to the length of the second optical fiber (6).

4. The rejection filter as claimed in claim 1, characterized in that the first and the second detectors are integrated in the same substrate.

5. An annular interferometer comprising :

– a light source (S) ;

– an interferometric wave guide (2) possessing two ends ;

– photodetector means for interference between two light waves (7 and 8) ;

– optical separating and mixing means (M) optically coupling the ends of the said wave guide with the light source and with the photodetector means ;

– optical dephasing means (φ) under electrical control and associated with the wave guide acting on the light waves circulating in the wave guide ;

– a control oscillator for the optical dephasing means supplying electrical signals (VC) with a period equal to the time taken by an optical wave supplied by the source to circulate along the wave guide ;

characterized in that the interference photodetector means comprise a filter, as claimed in any one of the preceding claims, whose time difference for the propagation of the two transmission means (5 and 6) is equal to the time taken by an optical wave coming from the source to pass along the interferometric wave guide.

6. The annular interferometer as claimed in claim 5, characterized in that the two transmission means (5 and 6) and also the wave guide of the interferometer are made up of optical fibers of the same nature, the difference in length between these two fibers being equal to the length of the interferometer wave guide.

# FIG_1

# FIG_2

EP 0 290 297 B1

# FIG_3

SOURCE ⌐S

1

M

3

SEPARATEUR   4

5

6

PHOTO-DETECTEUR   7

PHOTO-DETECTEUR   8

90

91

9

92

SENS1

SENS 2

VC

Ø

2

# FIG_4

PS

PS max

PS   0

PS min

O   π/2   π   2π   Δφ